# EUROPÄISCHE PATENTSCHRIFT

(11) **EP 0 783 741 B1**
(45) Veröffentlichungstag und Bekanntmachung des Hinweises auf die Patenterteilung: **04.03.1998**
(21) Anmeldenummer: 95931886.6
(22) Anmeldetag: 19.09.1995
(51) Int. Cl.: G07F 7/08

(54) **DATENÜBERTRAGUNGSSYSTEM MIT EINEM TERMINAL UND EINER TRAGBAREN DATENTRÄGERANORDNUNG UND VERFAHREN ZUM WIEDERAUFLADEN DER TRAGBAREN DATENTRÄGERANORDNUNG MITTELS DES TERMINALS**
DATA TRANSFER SYSTEM COMPRISING A TERMINAL AND A PORTABLE DATA CARRIER AND METHOD OF RECHARGING THE PORTABLE DATA CARRIER BY MEANS OF THE TERMINAL
SYSTEME DE TRANSFERT DE DONNEES COMPRENANT UN TERMINAL ET UN SUPPORT PORTATIF DE DONNEES, ET PROCEDE DE RECHARGEMENT DU SUPPORT PORTATIF DE DONNEES AU MOYEN DU TERMINAL

(30) Priorität: 30.09.1994 DE 4435137; 03.11.1994 DE 4439266
(43) Veröffentlichungstag der Anmeldung: 16.07.1997
(73) Patentinhaber: SIEMENS AKTIENGESELLSCHAFT, 80333 München (DE)
(72) Erfinder: SCHRENK, Hartmut, D-85540 Haar (DE)
(86) Internationale Anmeldenummer: DE9501286
(87) Internationale Veröffentlichungsnummer: WO9610810

(56) Entgegenhaltungen:
- EP-A- 0 268 106
- EP-A- 0 292 658
- EP-A- 0 398 545
- EP-A- 0 409 701
- DE-A- 4 230 866
- FR-A- 2 667 192
- FR-A- 2 689 662
- FR-A- 2 701 578

## Beschreibung

Die Erfindung betrifft ein Datenübertragungssystem mit zumindest einem Terminal und mit zumindest einer tragbaren Datenträgeranordnung, die mit einem nicht-flüchtigen Halbleiterspeicher versehen ist, der zumindest einen ersten als Zähler fungierenden, einen abbuchbaren Geldwert repräsentierenden Wertbereich aufweist, sowie ein Wiederaufladeverfahren für den Wertbereich der tragbaren Datenträgeranordnung.

Eine solche tragbare Datenträgeranordnung ist beispielsweise eine heute gebräuchliche Chipkarte, die beispielsweise als Telefonkarte benutzt wird. In diesem Fall ist das stationäre Terminal ein kartentauglicher Telefonapparat. Solche als einfache Speicherkarten ausgeführten Chipkarten enthalten einen nicht-flüchtigen Halbleiterspeicher, beispielsweise ein EEPROM, das im wesentlichen als Zähler für die voraus bezahlten und abzubuchenden Telefoneinheiten fungiert. Das EEPROM kann dabei beispielsweise gemäß der EP-B 0321 727 bzw. US-A 5,001,332 beschaltet sein, so daß es als mehrstufiger, Abacus-ähnlicher Zähler arbeitet. Der Wert der Karte und damit der Zählumfang des Zählers wird durch Beschreiben und damit Blockieren der Bereiche des Zählers, die nicht mehr erlaubt sein sollen, festgelegt. Vor dieser Festlegung hat der Zähler immer den maximalen Zählumfang. Heute übliche Telefonkarten sind nur einmal zu gebrauchen und werden nach dem Gebrauch weggeworfen. Es ist aber auch der Gebrauch solcher Chipkarten als elektronische Geldbörse im Gespräch. Für diesen Zweck verwendbare Chipkarten sind nur sinnvoll, wenn sie wiederaufladbar sind, wenn also der Zählerstand wieder erhöht werden kann, nachdem ein gewisser Betrag abgebucht worden ist. Diese Erhöhung des Zählerstands findet an speziellen Ladeterminals statt, an denen der Benutzer entweder durch Bareinzahlung, mittels Kreditkarte oder durch Angabe einer Kontonummer einen gewünschten Betrag auf seine Karte aufbuchen kann. Beim Wiederaufladen des Zählers einer Chipkarte kann es aufgrund des Aufbaus von EEPROMs erforderlich sein, zunächst einen größeren Zählbereich oder den gesamten Zähler zu löschen, das heißt es wird vorübergehend ein zu hoher Zählumfang eingestellt. Erst danach kann der neue Zählerstand durch erneute Begrenzung des Zählumfangs durch Programmiervorgänge eingestellt werden.

Wenn ein Benutzer in der Zeit zwischen dem Löschen des Zählers und dem erneuten Programmieren die Karte aus dem Terminal zieht, hätte er einen zu hohen Betrag aufgebucht bekommen, wodurch eine mißbräuchliche Manipulation ermöglicht wird. Außerdem ist es denkbar, daß ein Benutzer den Datenverkehr zwischen Terminal und Karte manipuliert, so daß auf diese Weise ein zu hoher Betrag aufgebucht werden kann.

Die Manipulation der Daten auf den Übertragungsweg könnte durch eine sogenannte elektronische Unterschrift verhindert werden. Die zu übermittelnden Daten können außerdem mittels eines geheimen Schlüssels verschlüsselt werden und können nur mit einem bestimmten, eindeutig dem Absender der Daten zuzuordnenden Schlüssel entschlüsselt werden, wodurch der Absender eindeutig identifizierbar wird und die Daten nicht manipuliert werden können, da der Verschlüsselungsschlüssel geheim ist. Eine solche Verschlüsselung und Entschlüsselung erfordert jedoch ein aufwendiges und sehr schnelles Rechenwerk, das nur mit teuren Mikroprozessoren möglich ist, wie sie beispielsweise in bereits bekannten Kryptokarten benutzt werden.

Die EP 0 398 545 Al beschreibt ein Verfahren und eine Anordnung zum Speichern von Daten in einen nicht-flüchtigen Speicher, der zumindest zwei Bereiche aufweist, in die abwechselnd aufeinanderfolgende Daten eingeschrieben werden. Hierbei ist jeder Speicherbereich durch ein nicht-flüchtig setzbares Flag als der zu einem bestimmten Zeitpunkt - beispielsweise Einschaltzeitpunkt - gültige Speicher kennzeichenbar. Da jedem Speicher ein eigenes Flag zugeordnet ist, das zwei Zustände annehmen kann, kann es aber vorkommen, daß beide Flags denselben Zustand annehmen. Deshalb ist es bei dem bekannten Verfahren/der bekannten Anordnung nötig, durch eine "Arbitration"-Logik den tatsächlich gültigen Zustand zu ermitteln.

Im "Normalfall" des Speicherbetriebs werden bei der bekannten Anordnung immer zu einem bestimmten Zeitpunkt beide Flags denselben gesetzten Zustand einnehmen, allerdings wird das Flag, das nicht zuletzt gesetzt wurde, rückgesetzt werden. Das bedeutet aber, daß immer ein Schreib- und ein Löschvorgang nötig sind, was zusätzlich Zeit kostet.

Aufgabe der Erfindung ist es somit, ein gattungsgemäßes Datenübertragungssystem und ein Verfahren anzugeben, bei dem auf einfache Weise eine manipulationssichere Wiederaufladung des Zählers der tragbaren Datenträgeranordnung schnell und mit geringem Schaltungsaufwand möglich ist.

Die Aufgabe wird dadurch gelost, daß in dem nicht-flüchtigen Halbleiterspeicher ein zweiter Wertbereich vorhanden ist, wobei nur jeweils einer der beiden Wertbereiche nicht-flüchtig aktivierbar ist und der jeweils andere Wertbereich nur vorlaufig aktiviert werden kann.

Nicht-flüchtig aktivierbar bedeutet hierbei, daß die Information, welcher der beiden Wertbereiche zuletzt als Wertbereich, von dem abgebucht werden konnte, definiert war, auch nach Abschalten der Betriebsspannung oder bei Unterbrechung des Ladevorgangs erhalten bleibt. Das bedeutet, daß ein nur vorläufig aktivierter Wertbereich nach Abschalten der Betriebsspannung bzw. Unterbrechung des Ladevorgangs und Wiedereinschalten der Betriebsspannung bzw. Neubeginn eines Ladevorgangs wieder deaktiviert ist und nochmals vorlaufig aktiviert werden muß. Erst nach erfolgreichem und korrektem Wiederaufladen der Chipkarte, d. h. erst nach korrektem Begrenzen des Zahlumfangs des nur vorläufig aktivierten Wertbereichs entsprechend der Summe aus dem Restwert und einem ins Terminal eingegebenen aufzubuchenden Wert, wird der nur vorläufig aktivierte Wertbereich nicht-flüchtig aktivierbar geschaltet, wodurch der zuvor nicht-flüchtig aktivierte Wertbereich deaktiviert wird und für einen neuen Ladevorgang zunächst nur vorläufig aktiviert werden kann.

Wenn also ein Betrüger versuchen würde, beim Ladevorgang des nur vorläufig aktivierten Wertbereichs nach dem Löschen des Zählers und vor dem erneuten Begrenzen seines Zahlumfangs entsprechend dem einzugebenden Wert die Karte aus dem Terminal zu entfernen, so würde bei der nächsten Benutzung, also beim nächsten Anlegen der Betriebsspannung, weiterhin der nicht-flüchtig aktivierbare Wertbereich aktiviert werden und der zuvor nur vorläufig aktivierte Wertbereich wäre deaktiviert.

In vorteilhafter Weiterbildung der Erfindung sind die Wertbereiche des nicht-flüchtigen Speichers gemaß Anspruch 2 über eine Auswahl-Logikschaltung mit einem nicht-flüchtigen Flag-Speicher, dessen Zustand den nicht-flüchtig aktivierten Wertbereich bestimmt, verbunden. Beim Abschalten der Betriebsspannung bleibt der Zustand des nicht-flüchtigen Flag-Speichers erhalten, wobei ein bestimmter Zustand immer demselben Wertbereich zugeordnet ist.

Zum vorläufigen Aktivieren des jeweils anderen Wertbereichs ist in erfindungsgemaßer Weise die Auswahl-Logikschaltung mit einem Ladesteuersignal beaufschlagbar. Dieses Ladesteuersignal hat in seinem neutralen Zustand, d. h. dem Zustand nach dem Anlegen der Betriebsspannung beispielsweise einen logischen "0"-Pegel und wird zum vorläufigen Aktivieren des neu zu ladenden Wertbereich entsprechend auf einen "1"-Pegel umgeschaltet.

Das oder die Ausgangssignal(e) steuern eine Schaltvorrichtung an, die die Wertbereiche mit einer Programmier-Logikschaltung und einer Verifizier-Logikschaltung verbindet. Ein Wertbereich wird also dadurch aktiviert, daß er mit der Programmier-Logikschaltung und der Verifizier-Logikschaltung verbunden wird.

Die tragbare Datentrageranordnung bzw. Chipkarte des erfindungsgenaßen Datenübertragungssystems und die vorteilhaften Weiterbildungen dieses Systems werden durch ein Verfahren gemäß dem Anspruch 5 wieder aufgeladen. Vorteilhafte Weiterbildungen des Verfahrens sind in den abhängigen Ansprüchen angegeben.

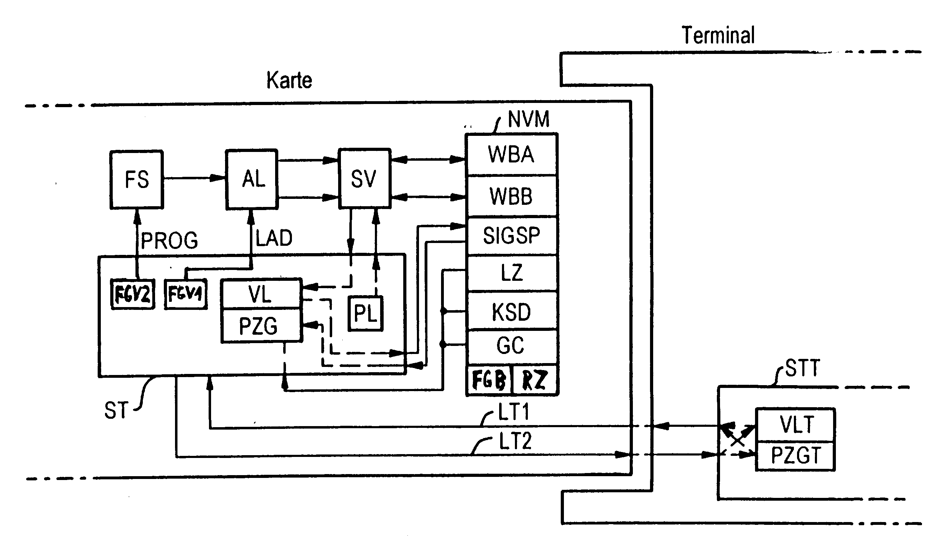

Die Erfindung wird nachfolgend mit Hilfe eines Ausführungsbeispiels anhand einer Figur näher erläutert. Dabei zeigt die Figur in schematischer Form ein Ladeterminal sowie eine in dieses eingeführte tragbare Datentrageranordnung. Die erfindungswesentlichen Schaltungsanordnungen der beiden Teile des Datenübertragungssystems sind in Form eines Blockschaltbilds dargestellt.

Eine tragbare Datenträgeranordnung, im folgenden Karte genannt, wobei auch andere Ausführungsarten, beispielsweise als Schlüssel, denkbar sind, ist in der Figur in ein Ladeterminal eines Datenübertragungssystems eingeführt. Die Karte beinhaltet einen nicht-flüchtigen Speicher NVM, der in vorteilhafter Weise durch ein EEPROM realisiert sein kann. Dieser Speicher NVM ist dabei in mehrere Bereiche unterteilt, wovon zwei als Wertbereiche WBA, WBB fungieren. Diese Wertbereiche WBA, WBB sind in vorteilhafter Weise als mehrstufige Zähler ausgeführt und beispielsweise gemaß der EP-B 0321 727 bzw. US-A 5,001,332 beschaltet. Solche Zähler sind Abwartszahler, wenn sie im gelöschten oder aufgeladenen Zustand den logischen Zustand "1" und damit einen maximalen, durch die Anzahl der Zahlstufen und Bits pro Stufe bestimmten Zahlumfang haben. Durch Beschreiben einer geeigneten Anzahl oberer Stufen bzw. einiger Bits der untersten dieser oberen Stufen laßt sich der Zählumfang begrenzen und ab diesem Sollwert bis zum Endwert "0" herunterzahlen.

Die Wertbereiche WBA, WBB sind über eine Schaltvorrichtung SV mit einer Programmier-Logikschaltung PL und einer Verifizier-Logikschaltung VL verbunden. Die Programmier-Logikschaltung PL und die Verifizier-Logikschaltung VL sind dabei Bestandteile einer Steuereinrichtung ST. Innerhalb der Steuereinrichtung ST sind die Verbindungslinien der Schaltungsteile strichliert dargestellt, womit angedeutet werden soll, daß die jeweilige Verbindungslinie zur Steuereinrichtung ST innerhalb der Steuereinrichtung ST auch mit anderen, nicht dargestellten Teilen der Steuereinrichtung ST verbunden sein kann.

Die Programmier-Logikschaltung PL dient zum Programmieren bzw. Beschreiben der Wertbereiche WBA, WBB und die Verifizier-Logikschaltung VL zum Verifizieren bzw. Überprüfen der beschriebenen Bereiche, ob richtig beschrieben wurde. In vorteilhafter Weise dient die Verifizier-Logikschaltung VL auch zur Erzeugung einer elektronischen Signatur eines Wertzustandes.

Die Schaltvorrichtung SV wird von einer Auswahl-Logikschaltung AL derart angesteuert, daß jeweils nur einer der Wertbereiche WBA, WBB mit der Programmier-Logikschaltung PL und Verifizier-Logikschaltung VL verbunden und dadurch aktiviert ist. Die Auswahl-Logikschaltung AL wird ihrerseits von einem Flag-Speicher FS und über ein Ladesteuersignal LAD von der Steuereinrichtung ST angesteuert. Die Auswahl-Logikschaltung AL kann beispielsweise mit einem EXOR-Gatter mit einem nichtinvertierenden und einem invertierenden Ausgang gebildet sein. Der Flag-Speicher FS ist ein nicht-flüchtiger Speicher und wird über ein Signal PROG von der Steuereinrichtung ST angesteuert. Der Flag-Speicher FS kann zwei Zustande einnehmen, wobei jeder dieser Zustande einem der Wertbereiche WBA, WBA zugeordnet ist. Da der Zustand des Flag-Speichers FS nicht-flüchtig gespeichert ist, wird bei Anlegen der Betriebsspannung an die Karte, d. h. beispielsweise durch Einführen der Karte in das Ladeterminal, der dem jeweils gespeicherten Zustand entsprechende Wertbereich WBA bzw. WBB aktiviert. Das Ladesteuersignal LAD nimmt hierzu beim Anlegen der Betriebsspannung einen definierten Zustand ein. Erst nach Ändern des Zustands des Ladesteuersignals LAD wird mittels der Schaltvorrichtung SV, die von der Auswahl-Logikschaltung AL entsprechend angesteuert wird, der jeweils andere Wertbereich WBB bzw. WBA vorläufig aktiviert und der zuvor aktivierte Wertbereich WBA bzw. WBB deaktiviert. Vorläufig deshalb, weil der Zustand des Ladesteuersignals flüchtig ist und bei Abschalten der Betriebsspannung, was z. B. durch Entfernen der Karte aus dem Ladeterminal erfolgt, wieder seinen definierten inaktiven Zustand einnimmt, so daß nach jedem Abschalten der Betriebsspannung oder erfindungsgemaß nach jedem Unterbrechen eines Ladevorgangs wieder der durch den Flag-Speicher FS definierte Wertbereich aktivierbar bzw. aktiviert ist.

Durch ein Signal PROG von der Steuereinrichtung ST zum Flag-Speicher FS kann eine Änderung des Zustands des Flagspeichers und damit der Austausch des aktivierten bzw. aktivierbaren Wertbereichs nicht-flüchtig durchgeführt werden.

Der nicht-flüchtige Speicher NVM enthält als weitere Bereiche einen Signaturspeicher SIGSP, der später erläutert wird, einen Ladezahler LZ, mit dem die Ladevorgange gezählt werden können, einen Bereich KSD, in dem kartenspezifizische Daten abgespeichert sind und einen Bereich GC, in dem ein geheimer Code gespeichert ist.

In der Steuereinrichtung ST ist außerdem ein Pseudo-ZufallsGenerator PZG enthalten, der in Wirkverbindung mit der Verifizier-Logikschaltung VL steht und außerdem mit dem Signaturspeicher SIGSP, dem Ladezahler LZ, dem Bereich KSD und dem Geheimcodebereich GC des nicht-flüchtigen Speichers NVM verbunden ist. Dieser Pseudo-Zufallsgenerator PZG ist in vorteilhafter Weise gemäß der EP-A 0 616 429 aufgebaut.

Auch im Ladeterminal ist eine Steuereinrichtung STT enthalten, die ebenfalls eine Verifizier-Logikschaltung VLT und einen Pseudo-Zufallsgenerator PZGT enthält, wobei die beiden Pseudo-Zufallsgeneratoren PZG und PZGT identisch sein müssen, wenn die Karte und das Terminal echt sind. Die Steuereinrichtung ST der Karte und die Steuereinrichtung STT des Terminals stehen über Leitungen LT1, LT2 miteinander in Verbindung, um Daten austauschen zu können.

Zu Beginn eines Ladevorgangs liest das Terminal die kartenspezifischen Daten, den aktuellen Stand des aktivierten und damit abbuchbaren Wertbereichs WBA bzw. WBB sowie den Stand des Ladezahlers LZ und des Signaturspeichers SIGSP. Aus den kartenspezifischen Daten kann ein echtes Terminal beispielsweise mittels einer Tabelle den Geheimcode der Karte ermitteln. Diese Daten sowie eine weitere Zufallszahl, die sogenannte Challenge, werden im Terminal in den Pseudo-Zufallsgenerator PZGT eingegeben, der eine Response berechnet. Sowohl die Challenge als auch die Response werden daraufhin an die Karte übermittelt. Dort wird ebenfalls anhand der Daten eine Response berechnet und mit der vom Terminal übermittelten Response mittels eines Komparators, der ebenfalls in der Steuereinrichtung ST enthalten ist, verglichen. Bei Übereinstimmung hat sich das Terminal als echt ausgewiesen, da es zum einen in der Lage war, den richtigen Geheimcode zu ermitteln, und außerdem den richtigen Pseudo-Zufallsgenerator PZGT hat.

Der Pseudo-Zufallsgenerator PZG bzw. PZGT dient auch dazu, eine elektronische Signatur des Inhalts der Wertbereiche WBA, WBB, also derer Zählerstände zu erzeugen. Da das Ausgangssignal des Pseudo-Zufallsgenerators von dem Geheimcode der Karte abhängt und nur mit diesem geheimen Code nachgerechnet werden kann, muß bei Übereinstimmung von Ausgangssignalen des Pseudo-Zufallsgenerators PZG bzw. PZGT derselbe geheime Code verwendet worden sein. Somit ist das Ausgangssignal eines Pseudo-Zufallsgenerators eindeutig einer bestimmten Karte zuordenbar, was als Signatur der Karte unter dem Zählerstand bezeichnet wird.

Damit durch eine Analyse mehrerer Berechnungsvorgange der Aufbau des Pseudo-Zufallsgenerators und die eingegebenen Daten nicht ermittelt werden können, sind ein oder mehrere der eingegebenen Daten veränderbar und verändern sich auch mit jedem Berechnungsvorgang. Eines dieser Daten ist der Stand des Ladezählers LZ, der mit jedem neuen Ladevorgang und damit mit jedem neuen Buchungsvorgang um 1 erhöht wird bzw. rückgesetzt wird, wenn der Zählumfang erschöpft ist.

Ein anderes Datum ist der Inhalt des Signaturspeichers SIGSP. In diesen wird jeweils das Ergebnis einer vorherigen Rechnung des Pseudo-Zufallsgenerators eingeschrieben, die ja eine Signatur des vorherigen Zählerstandes ist. Damit ist sichergestellt, daß sich das Ausgangssignals des Pseudo-Zufallsgenerators PZG nur mit verschwindender Wahrscheinlichkeit wiederholt und somit nicht analysiert werden kann.

In den Signaturspeicher SIGSP kann in einer Variante der Erfindung als Signatur des Ladevorgangs über das Ladeterminal bei jedem Ladevorgang ein neuer Wert direkt eingeschrieben werden.

Ein erfindungsgemäßer Ladevorgang läuft in einfachster Weise derart ab, daß nach Einführen der Karte in das Ladeterminal und damit nach Anlegen einer Betriebsspannung der durch den Zustand des Flag-Speichers FS definierte Wertbereich WBA oder WBB aktiviert ist und vom Terminal ausgelesen wird. Durch Ändern des Zustands des Ladesteuersignals LAD wird der andere Wertbereich WBB oder WBA vorläufig aktiviert und der zuvor aktivierte vorläufig deaktiviert. Dann wird der nunmehr aktivierte Wertbereich WBB oder WBA gelöscht, wobei dessen Zähler einen zu großen Zählumfang annimmt. Daraufhin wird im Terminal aus dessen altem Zählerstand und dem vom Benutzer ins Terminal eingegebenen aufzubuchenden Betrag ein neuer Zählerstand ermittelt und an die Karte übertragen. Würde der Benutzer vorher die Karte aus dem Terminal entfernen, hätte er einen zu hohen Betrag aufgebucht bekommen, wenn die Programmierung des Wertbereichs bereits endgültig und nicht-flüchtig erfolgt wäre. Durch erneutes Einführen der Karte in das Terminal wird aber in erfindungsgemäßer Weise wieder der vorherige Wertbereich WBA bzw. WBB mit dem alten Zählerstand aktiviert, da der Zustand des Flag-Speichers FS noch nicht geändert worden war. Erst wenn der neue Zählerstand in den vorläufig aktivierten Wertbereich WBB bzw. WBA einprogrammiert wurde, wird der Zustand des Flag-Speicher FS durch ein Signal PROG von der Steuereinrichtung ST geändert, wodurch der neue Wertbereich nicht-flüchtig aktivierbar ist und bei jedem neuen Anlegen der Betriebsspannung, also bei jedem Einführen der Karte in ein Terminal aktiviert wird, beispielsweise um Geld abzubuchen.

Um eine Manipulation des neuen Zählerstandes bei der Übertragung vom Terminal zur Karte zu verhindern, wird in erfindungsgemaßer Weiterbildung des Verfahrens nach dem Übertragen des neuen Zählerstandes zur Karte dort gemäß dem oben beschriebenen Verfahren der Zählerstand signiert. Die Signatur wird anschließend zum Terminal übertragen und dort mit einer ebenfalls ermittelten Signatur verglichen. Bei Übereinstimmung ist sichergestellt, daß der richtige Zählerstand zur Karte übertragen wurde. Bei Nicht-Übereinstimmung wird der Ladevorgang abgebrochen, wodurch der falsche Zählerstand keinen Einfluß auf spätere Abbuchvorgänge hat, da der Zustand des Flag-Speichers FS noch nicht geändert wurde. Dieser wird erst nach Erkennen der Übereinstimmung der Signaturen und Übermitteln eines entsprechenden Signals vom Terminal an die Karte geändert.

In Weiterbildung des erfindungsgemäßen Verfahrens muß sich das Terminal gegenüber der Karte authentifizieren, bevor ein Ladevorgang gestartet werden kann. Dadurch ist sichergestellt, daß kein falsches Ladegerät zum Aufbuchen einer Karte benutzt werden kann. Für diese Authentifizierung werden aus den vom Terminal aus der Karte gelesenen Daten und einer Challenge eine Response berechnet, die zusammen mit der Challenge an die Karte übermittelt und dort mit einem ebenfalls mittels der Challenge und den Kartendaten berechneten Response verglichen wird. Nur bei Übereinstimmung der Responses können das Ladesteuersignal LAD und auch das Programmiersignal PROG erzeugt und damit ein Ladevorgang begonnen werden. Zu diesem Zweck sind in der tragbaren Datenträgeranordnung Freigabevorrichtungen FGV1, FGV2 vorgesehen, die von der Steuereinrichtung ST geeignet angesteuert werden. Ein solcher Ladevorgang wird dabei beispielsweise durch Erhöhen des Standes des Ladezahlers LZ oder durch einen Dummy-Programmierimpuls gestartet. Ein Dummy-Programmierimpuls ist dabei ein Programmierimpuls auf eine nicht-gültige Adresse des nicht-flüchtigen Speichers NVM, der von der Steuereinrichtung ST der Karte als Steuerbefehl erkannt wird.

Auch nach dem Start eines Ladevorganges, nachdem das Terminal seine Berechtigung nachgewiesen hat und das Ladesignal LAD erzeugt worden ist, könnte es einem Betrüger gelingen, Einfluß auf den Wert des Zählerstandes zu nehmen und das Programmiersignal PROG zur nicht-flüchtigen Aktivierung des Zählerstandes unabhängig vom Terminal auszulösen. In einer Weiterbildung des erfindungsgemäßen Verfahrens muß vor Erzeugung des Programmiersignals PROG das Terminal noch einmal seine Berechtigung nachweisen, das heißt, es muß sich noch einmal authentifizieren. Die Erzeugung der Responses entspricht dabei der bei der ersten Berechtigungsprüfung zum Start eines Ladevorgangs.

Um eine Wiederholung von Responses zu verhindern, die von der Datenträgeranordnung im Rahmen einer Signaturberechnung ausgegeben werden und zur Erzeugung des Programmiersignals PROG ausgenutzt werden könnten, wird zur Erzeugung einer Response in erfindungsgemäßer Weise ein sich bei jeder Responseberechnung änderndes Datum verwendet. Dieses Datum wird durch einen Responsezahler RZ geliefert, der vor jeder Responseberechnung nicht-flüchtig geändert wird und dessen Zählerstand die Responseberechnung beeinflußt. Der Responsezähler RZ ist in vorteilhafter Weise als Bereich des nicht-flüchtigen Speichers realisert.

Durch das erfindungsgemäße Datenübertragungssystem und das erfindungsgemäße Verfahren wird eine sichere Wiederaufladung einer tragbaren Datenträgereinrichtung, beispielsweise einer Chipkarte, erreicht.

## Patentansprüche

1. Datenübertragungssystem mit zumindest einem Terminal und mit zumindest einer tragbaren Datenträgeranordnung, die mit einem nicht-flüchtigen Halbleiterspeicher (NVM) versehen ist, der zumindest einen ersten als Zähler fungierenden, einen abbuchbaren Geldwert repräsentierenden Wertbereich (WBA) aufweist,
**dadurch gekennzeichnet**,
- daß der nicht-flüchtige Halbleiterspeicher (NVM) einen zweiten als Zähler fungierenden Wertbereich (WBB) aufweist,
- daß die Wertbereiche (WBA, WBB) des nicht-flüchtigen Speichers (NVM) über eine Auswahl-Logikschaltung (AL) mit einem nicht-flüchtigen Flagspeicher (FS), der nur zwei Zustände annehmen kann, verbunden sind,
- daß der jeweilige Zustand des Flagspeichers (FS) denjenigen der beiden Wertbereiche (WBA bzw. WBB) bestimmt, der zum Auslesen und Zählen nicht-flüchtig freigebbar aber gegen Aufladung gesperrt ist,
- daß der jeweils andere Wertbereich (WBB bzw. WBA) vorläufig nur flüchtig zum Aufladen freigebbar ist,
- daß zu einem Zeitpunkt nur jeweils einer der Wertbereiche (WBA, WBB) freigegeben ist.

2. Datenübertragungssystem nach Anspruch 1, **dadurch gekennzeichnet**, daß die Auswahl-Logikschaltung (AL) mit einem Ladesteuersignal (LAD) beaufschlagbar ist, das die vorläufige Aktivierung des nicht nicht-flüchtig freigebbaren Wertbereichs (WBB bzw. WBA) bewirkt und den nicht-flüchtig freigebbaren Wertbereich (WBA bzw. WBB) vorläufig deaktiviert.

3. Datenübertragungssystem nach Anspruch 1 oder 2, **dadurch gekennzeichnet**, daß zwischen der Auswahl-Logikschaltung (AL) und dem nicht-flüchtigen Speicher (NVM) eine Schaltvorrichtung (SV) vorgesehen ist, die in Abhängigkeit von dem oder den Ausgangssignal(en) der Auswahl-Logikschaltung (AL) eine Programmier-Logikschaltung (PL) und eine Verifizier-Logikschaltung (VL) mit dem jeweils aktiven Wertbereich (WBA bzw. WBB) verbindet.

4. Datenübertragungssystem nach Anspruch 2, **dadurch gekennzeichnet**, daß in der Datenträgeranordnung eine erste Freigabevorrichtung (FGV1) vorgesehen ist, die die Erzeugung eines Ladesignals (LAD) erst nach einer positiven Authentifizierung des Terminals zuläßt.

5. Datenübertragungssystem nach einem der Ansprüche 1 bis 4, **dadurch gekennzeichnet**, daß der nicht-flüchtige Flagspeicher (FS) mit einem Programmiersignal (PROG) beaufschlagbar ist, das die Umwandlung des vorläufig freigebbaren Wertbereichs (WBB bzw. WBA) in den nicht-flüchtig freigebbaren Wertbereich (WBA bzw. WBB) veranlaßt.

6. Datenübertragungssystem nach Anspruch 5, **dadurch gekennzeichnet**, daß in der Datenträgeranordnung eine zweite Freigabevorrichtung (FGV2) vorgesehen ist, die die Erzeugung des Programmersignals (PROG) erst nach einer positiven Authentifizierung des Terminals zuläßt.

7. Datenübertragungssystem nach Anspruch 4 oder 6, **dadurch gekennzeichnet**, daß der nicht-flüchtige Halbleiterspeicher (NVM) einen als nicht-flüchtige Zählvorrichtung fungierenden Freigabebereich (FGB) aufweist, in dem jeder Versuch zur Erlangung der Freigabe nicht-flüchtig registrierbar ist und der aufeinanderfolgende Freigabeprozeduren unterscheidbar macht.

8. Wiederaufladeverfahren für eine einen Geldwert repräsentierende tragbare Datenträgeranordnung mittels eines Terminals eines Datenübertragungssystem gemäß einem der Ansprüche 1 bis 7 mit den Schritten:
a) Lesen des alten Zählerstandes eines nicht-flüchtig freigebbaren Wertbereichs (WBA bzw. WBB) aus der tragbaren Datenträgeranordnung mittels des Terminals
b) Berechnen eines neuen Zählerstandes aus dem alten Zählerstand und in das Terminal eingegebenen aufzubuchenden Daten im Terminal
c) Übertragen des neuen Zählerstandes vom Terminal zur tragbaren Datenträgeranordnung
d) Schreiben des neuen Zählerstandes in den mittels eines Ladesteuersignals (LAD) aktivierten, nur flüchtig freigegebenen Wertbereich (WBB bzw. WBA) des nicht-flüchtigen Speichers (NVM)
e) Ändern des Zustands eines Flagspeichers (FS), so daß der Wertbereich (WBB bzw. WBA) mit dem neuen Zählerstand nicht-flüchtig freigebbar wird.

9. Verfahren nach Anspruch 8, **dadurch gekennzeichnet**,
daß nach dem Schritt d) folgende weiteren Schritte durchgeführt werden:
d1) Signieren des neuen Zählerstandes in der tragbaren Datenträgeranordnung und Übertragen der Signatur zum Terminal
d2) Ermitteln der Signatur des neuen Zählerstandes im Terminal und Vergleichen der beiden Signaturen,
daß der Schritt e) nur nach Übereinstimmung der beiden Signaturen durchgeführt wird und
daß bei Nicht-Übereinstimmung der beiden Signaturen das Verfahren abgebrochen wird.

10. Verfahren nach Anspruch 8 oder 9, **dadurch gekennzeichnet**, daß nach dem Schritt a) folgende weiteren Schritte durchgeführt werden:
a1) Lesen von für die tragbare Datenträgeranordnung spezifischen Daten aus der tragbaren Datenträgeranordnung mittels des Terminals
a2) Erzeugen einer Challenge und Ermitteln einer Response aus der Challenge und zumindest einem Teil der spezifischen Daten und dem alten Zählerstand im Terminal
a3) Übermitteln der Challenge und der Response vom Terminal zur tragbaren Datenträgeranordnung
a4) Ermitteln einer Response aus der Challenge in der tragbaren Datenträgeranordnung und Vergleichen der beiden Responses.

11. Verfahren nach Anspruch 8, 9 oder 10, **dadurch gekennzeichnet**, daß nach dem Schritt d) bzw. d2) folgende weiteren Schritte durchgeführt werden:
d3) Lesen von für die tragbare Datenträgeranordnung spezifischen Daten aus der tragbaren Datenträgeranordnung mittels des Terminals
d4) Erzeugen einer Challenge und Ermitteln einer Response aus der Challenge und zumindest einem Teil der spezifischen Daten und dem alten Zählerstand im Terminal
d5) Übermitteln der Challenge und der Response vom Terminal zur tragbaren Datenträgeranordnung
d6) Ermitteln einer Response aus der Challenge in der tragbaren Datenträgeranordnung und Vergleichen der beiden Responses
und daß nur bei Übereinstimmung der beiden Responses mit Schritt e) fortgefahren wird und bei Nicht-Übereinstimmung das Verfahren abgebrochen wird.

12. Verfahren nach einem der Ansprüche 9 bis 11, **dadurch gekennzeichnet**, daß zum Signieren eines Zählerstandes oder zum Erzeugen einer Response ein sich mit jedem Ladevorgang änderndes Datum verwendet wird und daß die Erzeugung einer Signatur oder einer Response mittels einer Pseudo-ZufallsGenerators (PZG) erfolgt.

13. Verfahren nach Anspruch 12, **dadurch gekennzeichnet**, daß das Datum der Wert eines Ladezählers (LZ) ist, der jeden Ladevorgang zählt.

14. Verfahren nach Anspruch 12, **dadurch gekennzeichnet**, daß das Datum der Wert eines Signaturspeichers (SIGSP) ist, in den die Signatur des alten Werts des jeweils nicht-flüchtig freigebbaren Wertbereichs (WBA bzw. WBB) eingeschrieben wird.

15. Verfahren nach Anspruch 12, **dadurch gekennzeichnet**, daß das Datum der Wert eines Signaturspeichers (SIGSP) ist, in den als Signatur des Ladevorgangs über das Ladeterminal bei jedem neuen Ladevorgang ein neuer Wert eingeschrieben wird.

16. Verfahren nach Anspruch 12, **dadurch gekennzeichnet**, daß vor jeder Responseberechnung ein Responsezähler (RZ) nicht flüchtig geändert und als sich änderndes Datum verwendet wird.

## Claims

1. Data transfer system having at least one terminal and having at least one portable data carrier arrangement, which is provided with a non-volatile semiconductor memory (NVM) which has at least a first value area (WBA) acting as a counter and representing a debitable monetary value, characterized
- in that the non-volatile semiconductor memory (NVM) has a second value area (WBB) acting as a counter,
- in that the value areas (WBA, WBB) of the non-volatile memory (NVM) are connected via a selection logic circuit (AL) to a non-volatile flag memory (FS), which can assume only two states,
- in that the respective state of the flag memory (FS) determines that one of the two value areas (WBA or WBB) which is capable of being enabled into a non-volatile state for reading out and counting but is inhibited for charging,
- in that the respectively other value area (WBB or WBA) is temporarily only capable of being enabled into a volatile state for charging,
- in that, at one point in time, in each case only one of the value areas (WBA, WBB) is enabled.

2. Data transfer system according to Claim 1, characterized in that the selection logic circuit (AL) can be subjected to a charging control signal (LAD), which effects the temporary activation of the value area (WBB or WBA) which is not capable of being enabled into a non-volatile state and temporarily deactivates the value area (WBA or WBB) which is capable of being enabled into the non-volatile state.

3. Data transfer system according to Claim 1 or 2, characterized in that between the selection logic circuit (AL) and the non-volatile memory (NVM) there is provided a switching device (SV) which, as a function of the output signal or signals of the selection logic circuit (AL), connects a programming logic circuit (PL) and a verifying logic circuit (VL) to the respectively active value area (WBA or WBB).

4. Data transfer system according to Claim 2, characterized in that in the data carrier arrangement there is provided a first enabling device (FGV1), which allows the generation of a charging signal (LAD) only after a positive authentication of the terminal.

5. Data transfer system according to one of Claims 1 to 4, characterized in that the non-volatile flag memory (FS) can be subjected to a programming signal (PROG), which initiates the transformation of the temporarily enablable value area (WBB or WBA) into the value area (WBA or WBB) which is capable of being enabled into a non-volatile state.

6. Data transfer system according to Claim 5, characterized in that in the data carrier arrangement there is provided a second enabling device (FGV2), which allows the generation of the programming signal (PROG) only after a positive authentication of the terminal.

7. Data transfer system according to Claim 4 or 6, characterized in that the non-volatile semiconductor memory (NVM) has an enabling area (FGB) which acts as a non-volatile counting device and in which every attempt to accomplish the enabling is registerable in a non-volatile state and is distinguishable from the successive enabling procedures.

8. Recharging method for a portable data carrier arrangement representing a monetary value by means of a terminal of a data transfer system according to one of Claims 1 to 7, having the steps:
a) reading of the old counter status of a value area (WBA or WBB) which has been enabled into a non-volatile state from the portable data carrier arrangement by means of the terminal
b) calculating of a new counter status in the terminal from the old counter status and data to be credited which have been input into the terminal
c) transferring of the new counter status from the terminal to the portable data carrier arrangement
d) writing of the new counter status into the value area (WBB or WBA) of the non-volatile memory (NVM) which has been activated and enabled only into a volatile state by means of a charging control signal (LAD)
e) altering the state of a flag memory (FS), so that the value area (WBB or WBA) with the new counter status becomes capable of being enabled into a non-volatile state.

9. Method according to Claim 8, characterized in that, after step d), the following further steps are carried out:
d1) signing of the new counter status in the portable data carrier arrangement and transferring of the signature to the terminal
d2) determining of the signature of the new counter status in the terminal and comparing of the two signatures,
in that step e) is carried out only after the two signatures match and in that, if the two signatures do not match, the method is abnormally terminated.

10. Method according to Claim 8 or 9, characterized in that, after step a), the following further steps are carried out:
a1) reading of data specific for the portable data carrier arrangement from the portable data carrier arrangement by means of the terminal
a2) generating of a challenge and determining of a response in the terminal from the challenge and at least some of the specific data and the old counter status
a3) transmitting of the challenge and the response by the terminal for the portable data carrier arrangement
a4) determining of a response from the challenge in the portable data carrier arrangement and comparing of the two responses.

11. Method according to Claim 8, 9 or 10, characterized in that, after step d) or d2), the following further steps are carried out:
d3) reading of data specific for the portable data carrier arrangement from the portable data carrier arrangement by means of the terminal
d4) generating of a challenge and determining of a response in the terminal from the challenge and at least some of the specific data and the old counter status
d5) transmitting of the challenge and the response by the terminal for the portable data carrier arrangement
d6) determining of a response from the challenge in the portable data carrier arrangement and comparing of the two responses
and in that proceeding with step e) only takes place if the two responses match and, if they do not match, the method is abnormally terminated.

12. Method according to one of Claims 9 to 11, characterized in that a datum altering with every charging operation is used for the signing of a counter status or for the generating of a response and in that the generation of a signature or of a response takes place by means of a pseudo-random generator (PZG).

13. Method according to Claim 12, characterized in that the datum is the value of a charging counter (LZ) which counts every charging operation.

14. Method according to Claim 12, characterized in that the datum is the value of a signature memory (SIGSP) to which the signature of the old value of the value area (WBA or WBB) which is respectively capable of being enabled into a non-volatile state is written.

15. Method according to Claim 12, characterized in that the datum is the value of a signature memory (SIGSP) into which a new value is written via the charging terminal as the signature of the charging operation in the case of every new charging operation.

16. Method according to Claim 12, characterized in that, before every response calculation, a response counter (RZ) is altered into a non-volatile state and is used as the altering datum.

## Revendications

1. Système de transfert de données comprenant au moins un terminal et au moins un support de données portatif pourvu d'une mémoire å semi-conducteurs non volatile (NVM), laquelle comporte au moins une première zone de valeur (WBA) faisant fonction de compteur et représentant une valeur d'argent débitable, caractérisé
- en ce que la mémoire à semi-conducteurs non volatile (NVM) comporte une deuxième zone de valeur (WBB) faisant fonction de compteur,
- en ce que les zones de valeur (WBA, WBB) de la mémoire non volatile (NVM) sont reliées, par l'intermédiaire d'un circuit logique de sélection (AL), à une mémoire d'indicateurs (FS) non volatile qui ne peut prendre que deux états,
- en ce que l'état respectif de la mémoire d'indicateurs (FS) détermine celle des deux zones de valeur (WBA ou WBB), qui peut être autorisée de manière non volatile à la lecture et au comptage mais qui est protégée contre le rechargement,
- en ce qu'à chaque fois l'autre zone de valeur (WBB ou WBA) ne peut être autorisée au rechargement que de manière provisoirement volatile,
- en ce qu'à un moment donné, l'une seulement des zones de valeur (WBA, WBB) est autorisée.

2. Système de transfert de données selon la revendication 1, caractérisé en ce qu'un signal de commande de chargement (LAD) peut être appliqué au circuit logique de sélection (AL), qui active provisoirement la zone de valeur (WBB ou WBA) ne pouvant être autorisée de manière non volatile et désactive provisoirement la zone de valeur (WBA ou WBB) pouvant être autorisée de manière non volatile.

3. Système de transfert de données selon la revendication 1 ou 2, caractérisé en ce qu'un circuit (SV) est prévu entre le circuit logique de sélection (AL) et la mémoire non volatile (NVM), qui en fonction du ou des signaux de sortie du circuit logique de sélection (AL) relie un circuit logique de programmation (PL) et un circuit logique de vérification (VL) à la zone de valeur (WBA ou WBB) à chaque fois active.

4. Système de transfert de données selon la revendication 2, caractérisé en ce qu'un premier dispositif d'autorisation (FGV1) est prévu dans le support de données, qui autorise la génération d'un signal de chargement seulement après une authentification positive du terminal.

5. Système de transfert de données selon l'une des revendications 1 à 4, caractérisé en ce qu'un signal de programmation (PROG) est applicable à la mémoire d'indicateurs (FS) non volatile, qui commande la conversion de la zone de valeur (WBB ou WBA) pouvant être provisoirement autorisée en zone de valeur (WBA ou WBB) pouvant être autorisée de manière non volatile.

6. Système de transfert de données selon la revendication 5, caractérisé en ce qu'un deuxième dispositif d'autorisation (FGV2) est prévu dans le support de données, qui autorise la génération du signal de programmation (PROG) seulement après une authentification positive du terminal.

7. Système de transfert de données selon la revendication 4 ou 6, caractérisé en ce que la mémoire à semi-conducteurs non volatile (NVM) comporte une zone d'autorisation (FGB) faisant fonction de dispositif de comptage non volatile, dans laquelle chaque essai pour obtenir l'autorisation peut être enregistré de manière non volatile et qui permet de distinguer des procédures d'autorisation successives.

8. Procédé de rechargement d'un support de données portatif représentant une valeur d'argent au moyen d'un terminal d'un système de transfert de données selon l'une des revendications 1 à 7, comprenant les étapes suivantes:
a) lecture de l'ancien état du compteur d'une zone de valeur (WBA ou WBB) pouvant être autorisée de manière non volatile, dans le support de données portatif au moyen du terminal,
b) calcul d'un nouvel état du compteur à partir de l'ancien état du compteur et à partir des données à créditer entrées dans le terminal,
c) transfert du nouvel état du compteur du terminal au support de données portatif,
d) écriture du nouvel état du compteur dans la zone de valeur (WBB ou WBA) activée au moyen d'un signal de commande de chargement (LAD) et autorisée seulement de manière volatile, de la mémoire non volatile (NVM),
e) changement de l'état d'une mémoire d'indicateurs (FS), de manière à ce que la zone de valeur (WBB ou WBA) avec le nouvel état du compteur puisse être autorisée de manière non volatile.

9. Procédé selon la revendication 8, caractérisé
en ce que l'on effectue après l'étape d) les étapes suivantes :
d1) signature du nouvel état du compteur dans le support de données portatif et transfert de la signature au terminal,
d2) recherche de la signature du nouvel état du compteur dans le terminal et comparaison des deux signatures,
en ce que l'on effectue l'étape e) uniquement après correspondance des deux signatures, et
en ce que l'on abandonne le procédé en cas de non-correspondance des deux signatures.

10. Procédé selon la revendication 8 ou 9, caractérisé en ce que l'on effectue après l'étape a) les étapes suivantes :
a1) lecture de données spécifiques au support de données portatif dans le support de données portatif au moyen du terminal,
a2) création d'un challenge et recherche d'une réponse à partir du challenge et d'une partie au moins des données spécifiques et de l'ancien état du compteur dans le terminal,
a3) transfert du challenge et de la réponse du terminal au support de données portatif,
a4) recherche d'une réponse à partir du challenge dans le support de données portatif et comparaison des deux réponses.

11. Procédé selon la revendication 8, 9 ou 10, caractérisé
en ce que l'on effectue après l'étape d) ou d2) les étapes suivantes :
d3) lecture de données spécifiques au support de données portatif à partir du support de données portatif au moyen du terminal,
d4) création d'un challenge et recherche d'une réponse à partir du challenge et d'une partie au moins des données spécifiques et de l'ancien état du compteur dans le terminal,
d5) transfert du challenge et de la réponse du terminal au support de données portatif,
d6) recherche d'une réponse à partir du challenge dans le support de données portatif et comparaison des deux réponses,
et en ce que l'on passe à l'étape e) uniquement en cas de correspondance des deux réponses et que l'on abandonne le procédé en cas de non-correspondance.

12. Procédé selon l'une des revendications 9 à 11, caractérisé en ce que l'on utilise pour la signature d'un état du compteur ou pour la création d'une réponse une date qui change à chaque chargement et en ce que la création d'une signature ou d'une réponse s'effectue au moyen d'un générateur pseudo-aléatoire (PZG).

13. Procédé selon la revendication 12, caractérisé en ce que la date est la valeur d'un compteur de chargement (LZ) qui compte chaque opération de chargement.

14. Procédé selon la revendication 12, caractérisé en ce que la date est la valeur d'une mémoire de signature (SIGSP), dans laquelle est enregistrée la signature de l'ancienne valeur de la zone de valeur (WBA ou WBB) pouvant être autorisée de manière non volatile.

15. Procédé selon la revendication 12, caractérisé en ce que la date est la valeur d'une mémoire de signature (SIGSP), dans laquelle est enregistrée à chaque nouvelle opération de chargement une nouvelle valeur représentant la signature de l'opération de chargement au moyen du terminal de chargement.

16. Procédé selon la revendication 12, caractérisé en ce qu'un compteur de réponse (RZ) est changé de manière non volatile avant chaque recherche de réponse et est utilisé comme date variable.
